# EUROPEAN PATENT SPECIFICATION

(11) **EP 4 035 083 B1**
(45) Date of publication and mention of the grant of the patent: **17.12.2025**
(21) Application number: 20775663.6
(22) Date of filing: 25.09.2020
(51) Int. Cl.: G06N 3/049, G06N 3/063

(54) **HARDWARE ARCHITECTURE FOR SPIKING NEURAL NETWORKS AND METHOD OF OPERATING**
HARDWARE-ARCHITEKTUR FÜR GEPULSTES NEURONALES NETZWERK UND BETRIEBSVERFAHREN
ARCHITECTURE MATÉRIELLE POUR DES RÉSEAUX DE NEURONES IMPULSIONNELS ET SON PROCÉDÉ DE FONCTIONNEMENT

(30) Priority: 26.09.2019 EP 19306208
(43) Date of publication of application: 03.08.2022
(73) Proprietor: Universite Cote D'Azur (UCA), 06103 Nice Cedex 2 (FR); Centre National de la Recherche Scientifique - CNRS, 75794 Paris Cedex 16 (FR)
(72) Inventor: MIRAMOND, Benoît, 06600 ANTIBES (FR); ABDERRAHMANE, Nassim, Antibes 06600 (FR)
(74) Representative: Cabinet Boettcher
(86) International application number: PCT/EP2020/076982
(87) International publication number: WO 2021/058786

(56) References cited:
- ABDERRAHMANE NASSIM ET AL: "Information Coding and Hardware Architecture of Spiking Neural Networks", 2019 22ND EUROMICRO CONFERENCE ON DIGITAL SYSTEM DESIGN (DSD), IEEE, 28 August 2019 (2019-08-28), pages 291 - 298, XP033637577, DOI: 10.1109/DSD.2019.00050

## Description

### Technical Field

The present invention relates to the field of computing architectures and more particularly relates to hardware architecture for spiking neural networks and a method for operating the network.

### Background Art

Machine learning is generating unprecedented interest in research and industry, due to recent results in many applied contexts such as image classification and abject recognition. However, the deployment of these systems requires huge computing capabilities, thus making them unsuitable for embedded systems. To deal with this limitation, many researchers are investigating brain-inspired computing, which is an alternative to the conventional Von Neumann architecture based computers (CPU/GPU) that meets the requirements for computing performance. However, this approach suffers energy-efficiency, and neuromorphic hardware circuits that are adaptable for both parallel and distributed computations need to be designed.

Over the past decade, Artificial Intelligence (AI) has been increasingly attracting the interest of industry and research organizations. Artificial Neural Networks (ANNs) are derived and inspired from the biological brain and have become the most well-known and frequently used form of AI. Even though ANNs have garnered a lot of interest in recent years, they stem from the 1940s with the apparition of the first computer. Subsequent work and advancements have led to the development of a wide variety of ANN models. However, many of these models settled for theory and were not implemented for industrial purposes back then.

Recently, those algorithms became competitive because of two factors: first, modern computers have reached sufficient computing performance to process ANN training and inference; second, the amount of data available is growing exponentially, satisfying the extensive training data requirements for ANNs.

However, the energy and hardware-resources intensiveness imposed by computation in complex form of ANNs are not matching with another current emerging technology: IoT (Internet of Things) and Edge Computing. To allow for ANNs to be executed in such embedded context, one must deploy dedicated hardware architectures for ANN acceleration. In this case, the design of neuromorphic architectures is particularly interesting when combined with the study of spiking neural networks.

Spiking Neural Network (SNN) for Deep Learning and Knowledge Representation is a current issue that is particularly relevant for a community of researchers interested in both neurosciences and machine learning. Several specific hardware solutions have already been proposed in the literature, but they are only solutions isolated from the overall design space where network topologies are often constrained by the characteristics of the circuit architecture.

The article "Information Coding and Hardware Architecture of Spiking Neural Networks", 2019 22nd Euromicro Conference on Digital System Design (DSD), IEEE, 28 August 2019-08-28), pages 291-298, XP033637577, from the inventors, presents the design of two different hardware architectures for Spiking Neural Networks: a Time-Multiplexed Architecture (TMA) and a Fully-Parallel Architecture (FPA).

These architectural schemes are classical models of hardware implementation. In the case of SNNs, these architectures do not take advantage of the reduction of activity throughout the depth of the network. Indeed, a more precise analysis of the dynamics of these networks shows that most of the spikes are generated by the input layer. The first neural layer, especially in the case of a convolutional layer, acts as a low pass filter that drastically reduces the number of spikes at the output. Thus, working in a fully-parallel manner from end to end underutilizes the number of HW processing elements and causes energy overhead. Moreover, the FPA implementation does not support event-based processing and operate in a frame-based way. On the other side, working in a time-multiplexed manner from end to end needs to process all the spikes sequentially. This results in time overhead in the first neural layer where the number of spikes remains high.

The inventors recommend the opposite approach, which consists in generating the architecture that best supports the network topology.

Thus, there is the need of a solution to solve the aforementioned problems. And there is a need for neuromorphic hardware circuits that are adaptable for both parallel and distributed computations. The present invention offers such a solution.

### Summary of the invention

According to a first embodiment of the present invention, there is provided a system as further described in the appended independent claim 1.

An object of the present invention is a neuromorphic hardware architecture adapted for the implementation of spiking neural networks. Particularly, the present invention offers a hybrid architecture combining fully-parallel hardware layers and time-multiplexed hardware layers. The hybrid architecture of the present invention meets the application-specific constraints.

Advantageously, a novel Hybrid Architecture, which combines the advantages of both time-multiplexed and parallel hardware implementations, is described.

Indeed, in this architecture, a first hidden layer, named fully-parallel hidden layer is implemented in a fully-parallel processing module, and a plurality of deeper hidden layers, named time-multiplexed hidden layers are implemented in a time-multiplexed processing module. This hybrid architectural configuration fits well with the Spike Select coding method.

The hybrid architecture enables an efficient processing of spikes in an SNN by adapting the parallelism to the activity of each layer. The hybrid architectural model breaks with the uniform processing of FPA and TMA. Consequently, a specific control unit to process the spikes asynchronously is implemented. The hybrid architecture guarantees an optimal even-based processing, where the units are activated only when spikes are incoming. Moreover, the hybrid architecture offers optimized energy consumption, by adjusting parallelism and latency.

The hybrid architecture uses a neural coding scheme for the conversion of input data to spike trains having a coding paradigm characterized by a low number of spikes propagating in the network.

Advantageously, the number of spiking events to process is reduced while keeping the same classification accuracy. By doing so, the amount of power consumed by the hardware is reduced.

The hybrid architecture has been developed in VHDL and simulated at the Register Transfer Level (RTL).

Most of the spiking activity in the network is located in the first layer. Therefore, the first hidden layer is the most solicited layer during processing. To take advantage of this aspect, the designed Hybrid Architecture is mixing both Time-Multiplexed Architecture (TMA) and Fully-Parallel Architecture (FPA), where first, the initial two layers are implemented using a Neural Core module having a structure similar to (FPA) and second, the remaining layers are time-multiplexed using one (NPU) per layer, as in (TMA). In the case of large-scale spiking neural networks, the time-multiplexed part is driven by a Network Controller that manages and connects the NPUs to an SDRAM holding their logical weights and to retrieve the weights from the external SDRAM memory and forward them to the corresponding (NPU). This novel hybrid architecture is particularly appropriated for the use of the Spike select coding in which spiking activity is concentrated in the first layer.

The hybrid architecture of the present invention takes advantage of the increasing spiking activity sparsity as it goes deeper into the network. This novel hybrid structure having a fully-parallel computation core for most solicited layers and time-multiplexed computation units for deeper layers, when combined with the proposed Spike Select Coding appears to be one of the most suitable approaches for future Deep SNNs implementation into embedded systems.

The hybrid architecture of the present invention is adapted to implement both fully-connected based SNNs and spiking convolutional neural networks.

A hardware architecture for spiking neural networks is claimed as comprising:
- a spike generator module for receiving an input pixel and generating a flow of spikes;
- a neural core module for receiving the flow of spikes and filtering it to generate a reduced number of spikes;
- a neural processing unit module for processing the reduced number of spikes;
- a classification module for selecting an output winner class;
the hardware architecture being characterized in that the neural core module comprises a hidden fully-parallel layer to process in parallel the received input spikes, and neural processing unit module comprises a plurality of hidden time-multiplexed layers to sequentially process the reduced number of spikes.

According to various embodiments:
- the spike generator is implemented as a neural coding function such as rate coding or spike select coding.
- the neural core module comprises an input layer to receive a flow of spikes and a first hidden layer implemented as fully-parallel circuits to process the spikes.
- the plurality of hidden layers comprises each a neural processing unit module to emulate the time-multiplexed layers.
- the classification module is a Terminate Delta like module.
- the flow of spikes is processed in an event-based data mode where only spiking events are processed by each layer of the architecture.
- the flow of spikes is processed in a frame-based data mode where every '0' and '1' in an input frame is processed by each layer of the architecture.

The invention also claims a Field Programmable Gate Array (FPGA) or an Application Specific Integrated Circuit (ASIC) comprising the claimed hybrid architecture.

The invention also addresses a method for operating the hybrid architecture as claimed.

Further advantages of the present invention will become clear to the skilled person upon examination of the drawings and detailed description. It is intended that any additional advantages be incorporated therein.

### Description of the drawings

Embodiments of the present invention will now be described by way of example with reference to the accompanying drawings in which like references denote similar elements, and in which:
Figure 1a shows a general block diagram of the Hardware Hybrid architecture of the present invention;
Figure 1b shows an implementation of the Hardware Hybrid architecture of the present invention in an embodiment for large-scale SNNs and frame-based spiking data;
Figure 2a shows a detailed block diagram of a Neural Core module of the present invention in an embodiment;
Figure 2b shows another embodiment of the Neural Core module of the present invention;
Figure 3 shows a detailed block diagram of a Neural Processing Unit module of the present invention in an embodiment;
Figures 4a and 4b show detailed block diagrams of a Classification module of the present invention in two embodiments;
Figure 5 shows a detailed block diagram of a Network controller module of the present invention for the embodiment in an embodiment;
Figure 6 is a flow chart of the general steps for operating the Hybrid Architecture of the present invention;
Figure 7 is a flow chart of the steps for operating the Neural Core module of the present invention in an embodiment;
Figure 8 is a flow chart of the steps for operating the Neural Processing Unit module of the present invention in an embodiment; and
Figure 9 shows a block diagram of an IF Neuron module in an embodiment.

### Detailed description of the invention

Before going to the description of the figures, a reference is made to an article published by the inventors titled "Design Space Exploration of Hardware Spiking Neurons for Embedded Artificial Intelligence", 2019.

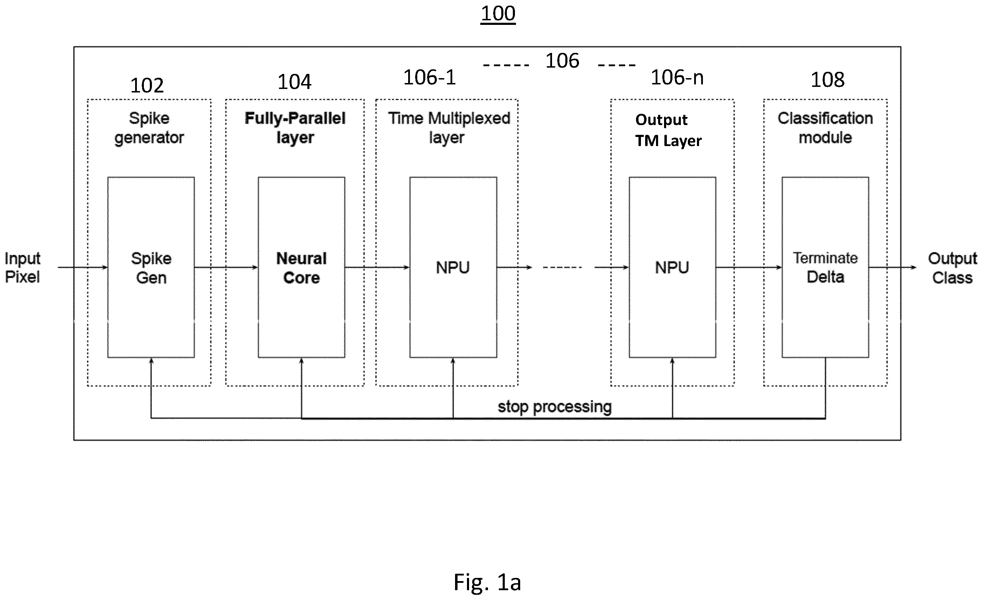

With reference first to figure 1a which is a non-limited example, a general architecture of the hardware hybrid architecture of the present invention is depicted. The hybrid architecture of the invention allows processing event-based data where only spiking events (e.g. input data equal to '1') are processed by each layer of the architecture or allows processing frame-based data where every '0' and '1' in an input frame is processed by each layer of the architecture.

Spiking events represent the address of the neurons that have emitted the spikes in the previous layer of the architecture.

The system 100 is illustrated as having several functional block circuits comprising a Spike Generator 102, a Fully-Parallel layer or Neural Core (NC) module 104 implementing a hidden fully-parallel layer, a Time-Multiplexed layer or Neural Processing Unit (NPU) modules 106 implementing a plurality of hidden Time-Multiplexed layers (106-1, 106-i up to 106-n), and a Terminate Delta or Classification module 108.

The general operating of the system 100 is to generate a spikes flow from input pixels of an image, which is then input to the Neural Core 104 wherein the spikes are filtered in a parallel processing. A reduced number of spikes is then processed in a time-multiplexed approach by the plurality of Neural Processing Units 106-i; and a final operation allows a classification and selection of a winner output class.

The information (input pixel) is encoded into spikes by the spike generator 102, inspired from neuroscience. Indeed, the neuron model mimics biological neurons and synaptic communication mechanisms based on action potentials. The information is thus represented as a flow of spikes, with a wide variety of neural coding techniques, such as Rate Coding, Spike Select, Single Burst, to name a few. The person skilled in the art will refer to the article of the inventors previously cited to get more details of these methods.

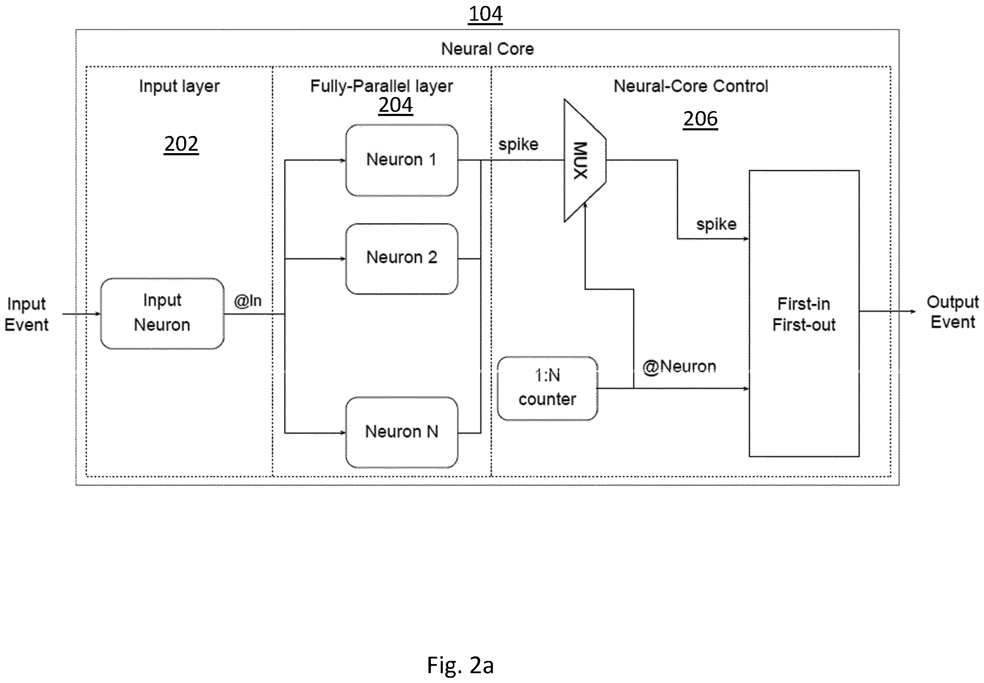

The Neural Core module 104 which a preferred implementation is shown on figure 2a, is a computation unit which emulates two layers (an input layer 202 and a fully-parallel layer 204). The input layer 202 comprises an Input Neuron module which forwards 'input events', i.e. a flow of spikes, to downstream neuron circuits which are implemented as a Fully Parallel Architecture (FPA) allowing to process in parallel the spiking events of the flow of spikes to filter the number of spikes and generate a reduced number of spikes. Each logical neuron is represented by a dedicated hardware circuit 'Neuron 1 to Neuron N' named indifferently in the description as 'neuron circuit' or 'hardware neuron' or 'IF neuron module' (for Integrated-and-Fire neuron).

A reduced flow of spikes output from the FP layer 204 is input to a Neural-Core Control 206. The Neural-Core Control is composed of a '1:N' counter, a multiplexer (MUX) and an output First-in First-out (FiFo) buffer. One can note that 'N' is the number of neuron circuits of the FP layer 204. When the N neuron circuits of the FP layer 204 have processed in parallel an input spiking event (i.e. a spike from the input flow of spikes), their output spikes are connected to the write-enable of the output FiFo buffer sequentially through the multiplexer MUX. The MUX block is configured to select the output spikes one after the other by using their addresses (@Neuron) given by the 1:N counter. These addresses are also connected to the input data of the FiFo module. In the case the output spike is high (spike=1), the output of the counter (i.e. the neuron's address) is written into the output buffer (FiFo). Once the counter ends the forward of all the FP layer 204 output spikes, it resets the count and repeats the same procedure for the next spikes.

Next the output of the Neural Core 104 - 'Output Event'-becomes the input of the Time-Multiplexed part of the hybrid architecture.

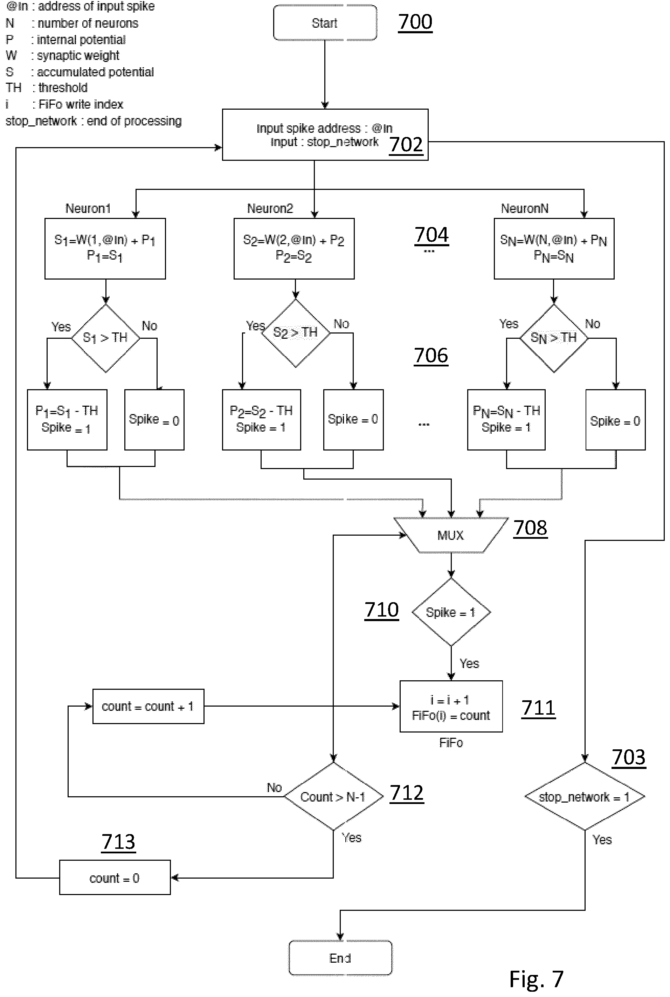

Figure 7 is a flow chart of the steps for operating a Neural Core module shown on figure 2a.

The process 700 begins by a first step 702 of reading the input spike address (@In) and a 'stop network' signal provided by the Terminate Delta module 108. On one hand 703, the process allows verifying if the 'stop network' signal is equal to "1" to end the process 700. On the other hand 704, the input spike address @In is forwarded to the neuron circuits of the FP layer to perform the integrate-and-fire rule. Each of the neurons is computed 704, the input address @In being used to retrieve the corresponding weight that is accumulated to the internal potential of the neuron Sᵢ. Each accumulated potential is compared to a threshold "TH" in a parallel way as in 706. When this potential is higher than the threshold, a spike is emitted, i.e. Spike=1, and the potential is updated by reducing from it the threshold "TH". These spikes are then used to write output spike addresses as spiking events in the FiFo. A multiplexer controlled by a counter is used to sequentially forward 708 the spikes one-by-one. If a spike is emitted 710, the address of the neuron that has emitted it (spiking event), is saved 711 in the FiFo buffer. Once the counter has forwarded all the spikes, "count = N-1" which is verified in 712, the count is reset (count=0) 713, and the process is repeated by reading new inputs (@In and stop network) 702.

Advantageously, as the number of spikes is drastically reduced by the FPA module, there is no such need of parallel computing and the plurality of NPU modules 106-i are implemented as a Time-Multiplexed Architecture (TMA) to allow a sequential processing of the spikes. There is as much as computing cycles as the number of logical neurons implemented in an NPU, and the number of Time-Multiplexed (TM) layers is predefined for a specific machine learning application.

The output of the last NPU, i.e. the Output TM Layer, becomes the input of the Classification module 108, also designated as Terminate Delta, Max Terminate or Winner Class module, which allows determining if the classification process is ended or not, by determining if a sufficient number of spikes has been received to classify the input image. If not, the process is iterated, or the process stops 'Stop Processing'.

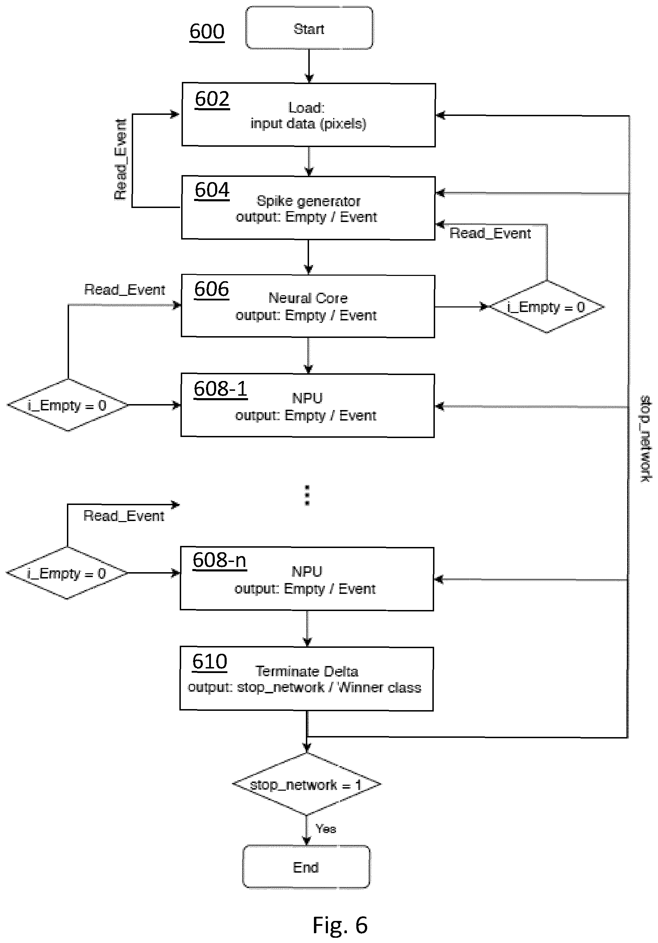

Figure 6 is a flow chart of the general steps for operating the hybrid architecture of the present invention, for example as shown on figure 1a.

The process 600 begins by a first step 602 of loading or receiving input data.

Next, the process allows the Spike Generator to generate 604 a flow of spikes from the input data.

On a next step 606, the process allows the Neural Core module to process the flow of spikes in a fully-parallel processing with a reduction of the number of spikes and allows generating Output Events.

Next on steps 608-1 to 608-n, the process allows each Output Event to be sequentially processed by the plurality of Neural Processing Units.

On a next step 610, the process allows the output of the last NPU to be processed by the Terminate Delta or Classification module to determine a winner class. During this last step, if the Terminate Delta determines a winner class, the process allows to activate the 'stop_network' signal to stop the process.

It is appreciated that all the steps of process 600 work in a pipelined way, optimally using the components of the architecture over time. For example, while step 602 is loading a next input data, the spike generator translates progressively the pixels of a previously generated flow of spikes. At a same time, the neural core is processing these input spikes, the plurality of NPUs process other recent data, and the Terminate Delta verifies the classification on current data received from the last NPU (608-n).

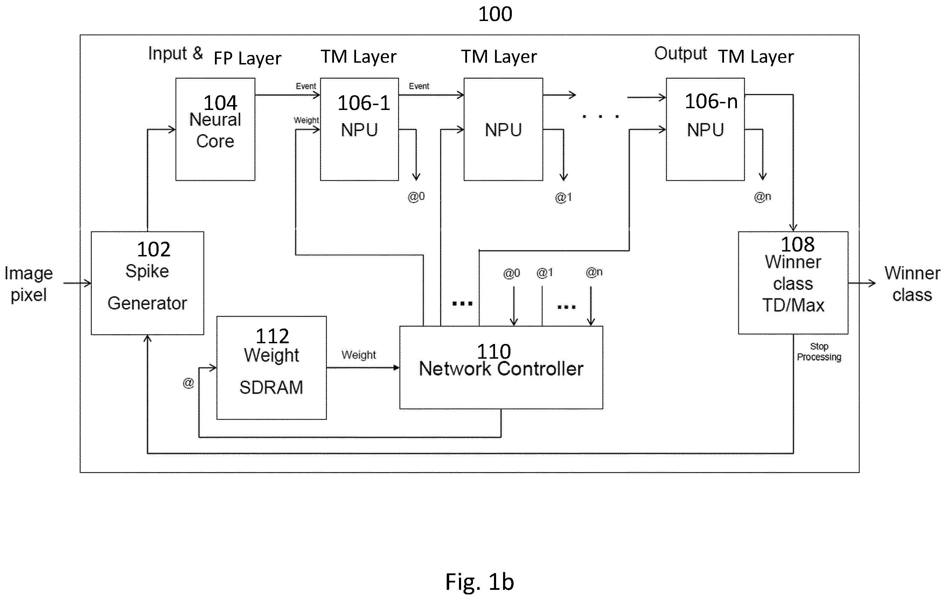

Going to figure 1b, another implementation of the hardware hybrid architecture of the invention is shown for an embodiment adapted to process frame-based (non-event based) input data, where every '0' and '1' in an input frame is processed by each layer of the architecture. The system further comprises a Network Controller 110 and a Memory 112 to cover large-scale spiking neural networks.

The Network Controller 110 allows handling the addresses and the weights for the process. The Network Controller is coupled to a Memory 112 which is able to store the weights. Memory usage is the common limitation for SNN architectures, which is due to all the parameters and activities of the neurons that must be stored. From that perspective, in order to deal with deeper networks that require a significant memory size, the FPGA on-chip memory will not be sufficient. Therefore, an external memory is preferably used to overcome this problem. To reinforce the memory capabilities of the FPGA fabric, an SDRAM is used in a preferred embodiment. The Network Controller module connects the other modules to the external memory.

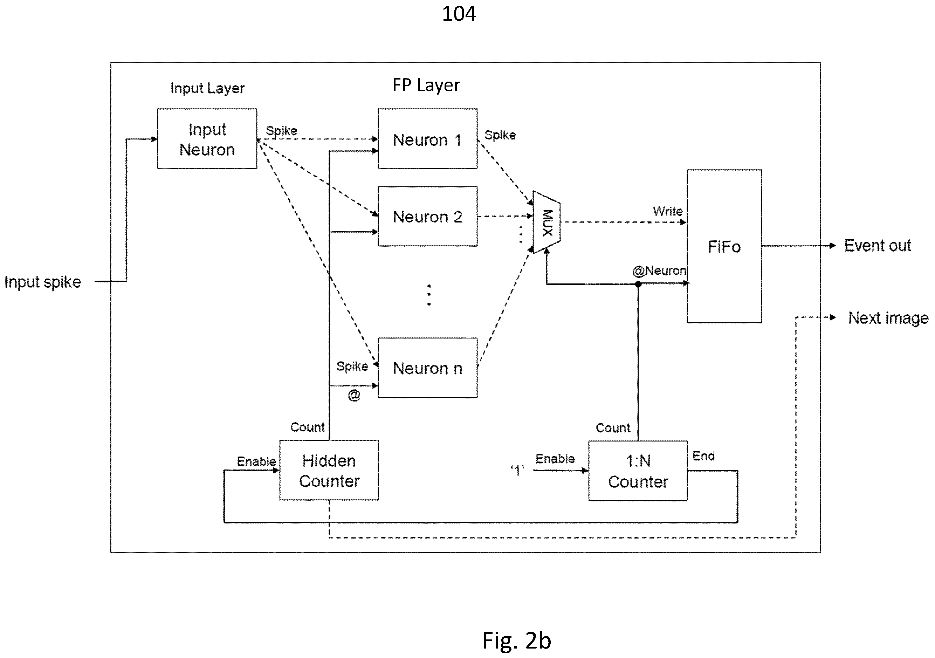

Figure 2b shows a variant of a Neural Core module 104 of the present invention adapted to process frame-based input data. In the frame-based or non-event-based data, the input spikes are not presented as events that indicate the addresses of pixels that have fired spikes. However, the data are presented as a series of "0" and "1". The spikes equal to "0" correspond to the pixels that have not emitted spikes and the spikes equal to "1" correspond to pixels that have emitted spikes. To deal with this kind of data, a first hidden counter is used to indicate the address of the input spikes that are equal to "1" to the neuron circuits in order to retrieve the appropriate weights and then perform the same process described for figure 2a.

The "IF Neuron Modules" integrate incoming spikes from the Input Neuron module and generate spikes according to "Integrate-and-Fire" rule. The weights are stored in registers, so that each "IF Neuron module" has its own weights stored in a dedicated register. There are as many "IF Neuron Modules" as logical neurons in the FP layer. Their outputs are stored in a FiFo buffer as spiking events, with a Counter Module indicating the corresponding neuron address to be stored. The Input Neuron forwards input spikes, spike by spike, where each spike is indicating the address of its source (e.g., pixel's address in the image). These input spike addresses of the input pixels are transmitted to the hidden FP layer neurons. The FP layer neurons use these addresses to access their on-chip memory weights to retrieve their appropriate synaptic weights and then perform the "integrate-and-fire" rule. A counter (1:N) is controlling a MUX component to read the output spikes of the hidden FP layer neurons and to store them in the output FiFo buffer.

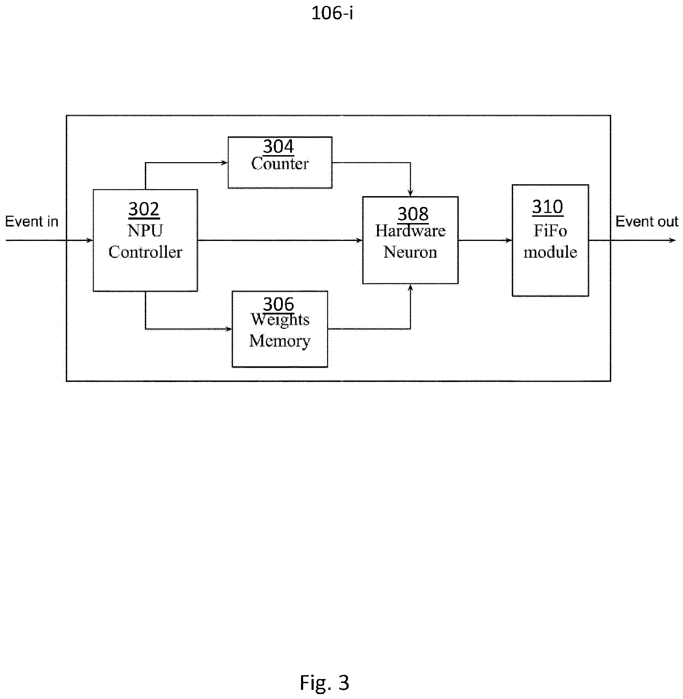

Figure 3 shows a detailed block diagram of a Neural Processing Unit module 106-i of one hidden Time-Multiplexed layer of the present invention in an embodiment. The (NPU) is used to emulate the time-multiplexed layers. When there is an input event to be processed by the NPU, first, the hardware neuron 308 is enabled by the NPU controller 302 to retrieve the address of the logical neuron it represents from the Counter 304 and the corresponding weights from the weights memory block 306. Secondly it operates its computation, and whenever it fires, the output spike is stored in the FiFo module 310 as a spiking event.

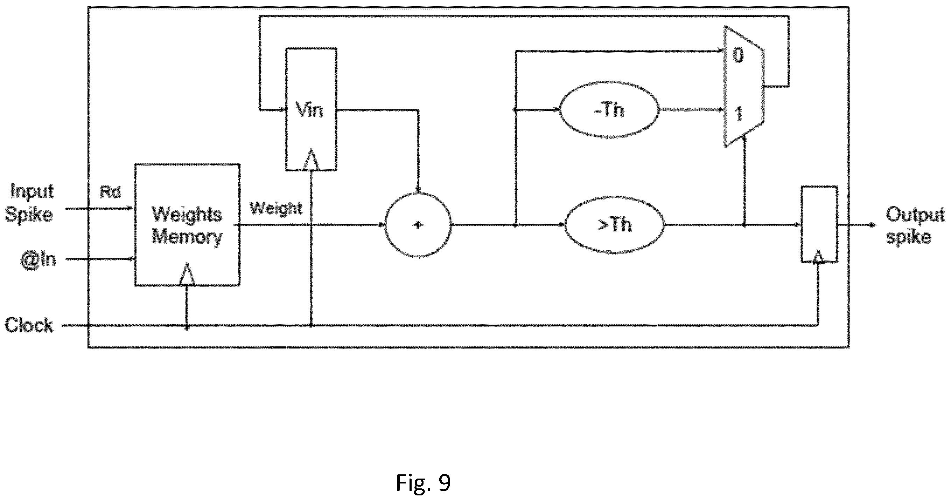

A single IF Neuron module, for which an implementation is shown on figure 9, operates successively for all neurons in the layer. Moreover, the NPU includes a FiFo Memory module 310, a Counter module 304 and an NPU Controller 302. These modules are connected as shown in figure 3 to form an NPU which processes spiking events in a coherent way. Besides the NPU controller, all the other modules as previously described are used by the NPU to accomplish their dedicated tasks. The goal of the NPU Controller is to manage the different NPU components to sequentially trigger logical neurons, allowing the hardware neuron to be fed with valid weights and activities. In addition, NPU controllers of different NPUs are connected to each other in order to ensure synchronization at the network-level. This synchronization is required because output classification process (Terminate module) depends on the arriving order of the spikes. Thanks to the NPU controller and the counter, several logical neurons can be time-multiplexed and thus computed in a single NPU.

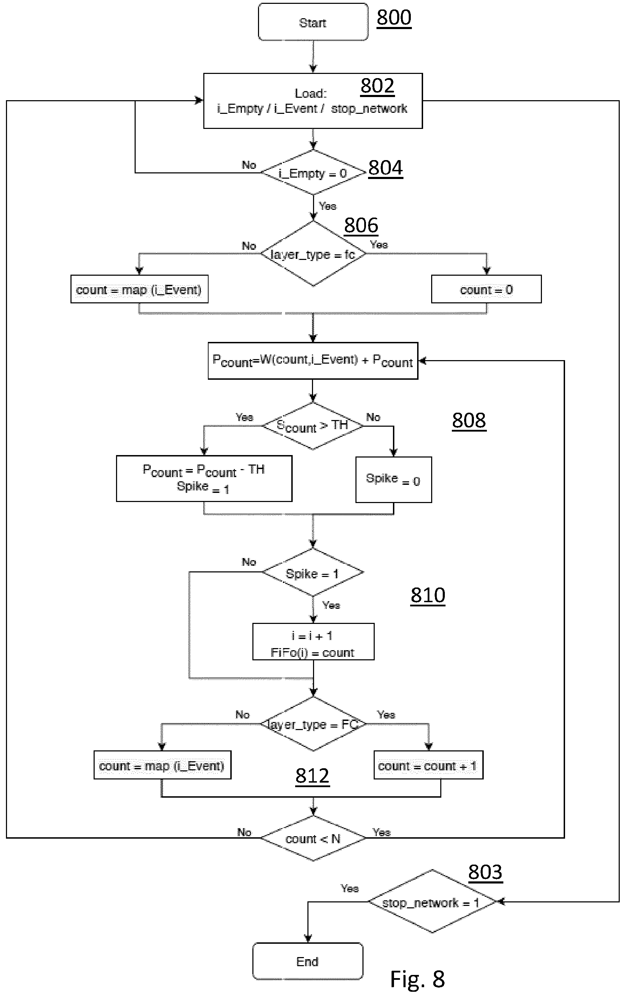

Figure 8 is a flow chart of the steps for operating the Neural Processing Unit module shown on figure 3.

The process 800 begins by a first step 802 of loading an input event, empty input signal and the stop processing signal. Whenever the terminate delta module activates the stop processing signal, the process is ended 803. Otherwise, the NPU checks the presence of input events by verifying the state of the empty input "i_Empty" signal 804. Then depending on the layer type 806 (i.e. a fully-connected layer or a convolutional layer), the addresses of the logical neurons are forwarded to the hardware neuron to retrieve internal activities and weights to perform the integrate-and-fire rule 808. The output of this neuron is saved in the FiFo buffer if the spike is high (Spike=1) 810. This process, controlled 812 by a counter, is repeated for all the logical neurons of the layer. Once all these neurons are processed, new inputs are loaded 802 to compute for the next input spike.

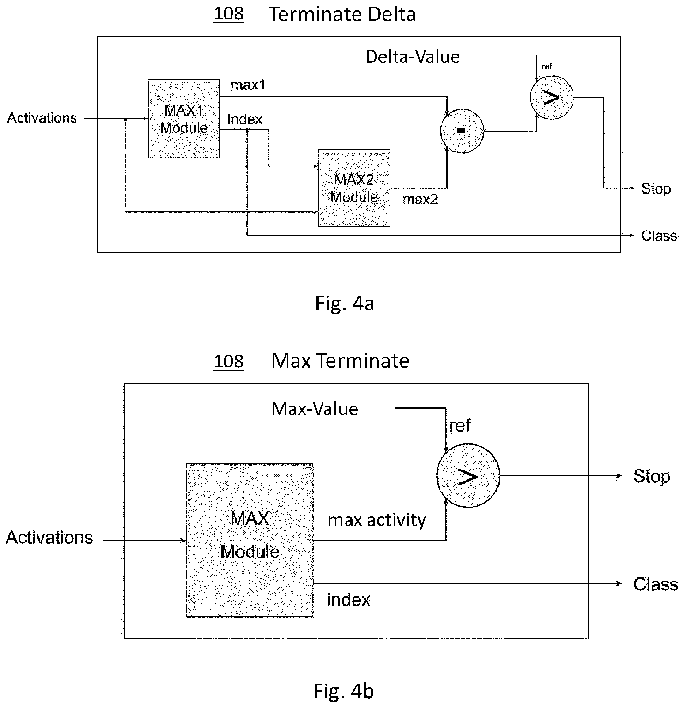

Figures 4a and 4b show detailed block diagrams of the Classification module 108 of the present invention in Max Terminate and Terminate embodiments. Before starting the description, let's one give a quick reminder concerning class selection procedures. First of all, note that each output neuron corresponds to a data class. During inference, the winning class is selected as the most spiking output neuron. In Terminate Delta (Figure 4a) procedure, the class prediction is enacted when the most spiking neuron has spiked *delta* times more than the second most spiking neuron. On other hand, in Max Terminate (Figure 4b), the classification process is completed whenever an output neuron (the most spiking neuron) reaches *max-value* spikes. *Delta-value* and *max-value* are user-defined parameters, usually set at 4.

For the design of the present hybrid architecture, to select the output winner class, preferably the Terminate Delta or the Max Terminate are chosen because they offer state-of-the-art accuracy and fast class selection. The figures 4a and 4b show the internal structures of these modules. The input of the module is a vector "Activations" containing the output activity of the SNN (number of spikes emitted by each output neuron so far).

On one hand, in the Terminate Delta module two *maximum sub-modules* are designed to detect the maximum value of an array, which are then used to determine the winning class and to terminate the processing. The first *maximum sub-module,* namely Max1, detects the maximum value of the output activation vector, and the second, namely Max2, detects the second maximum value of this same vector. The difference between the outputs of Max1 module and Max2 module is then computed. Finally, if the difference is greater than a threshold *delta-value,* the class corresponding to Max1 Module is enacted as the winner.

On the other hand, the Max Terminate module integrates only one *maximum* block that returns the index of the output neuron with the highest spiking activity and its activity. Then this activity is compared to a user-defined threshold *max-value.* If the maximum spiking activity is greater than *max-value,* the corresponding output neuron is enacted as the winner class, and the processing is stopped.

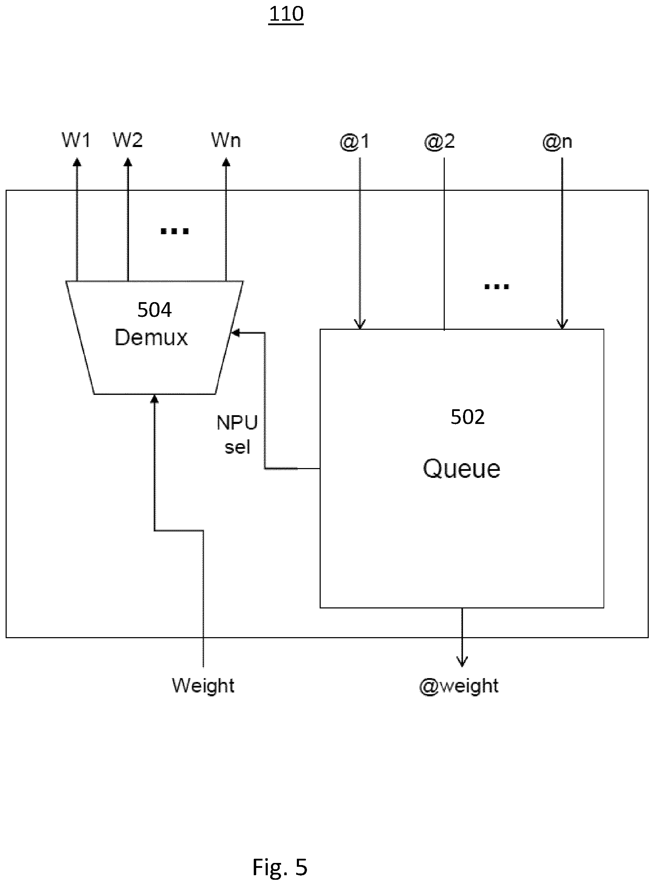

Figure 5 shows a detailed block diagram of a Network Controller module 110 of the present invention in an embodiment. The Network Controller module is a combination of a FiFo module (Queue) 502 and a demultiplexer (DEMUX) 504. The FiFo module accesses the SDRAM according to the NPU requests with a first-come-first-served policy, i.e., when an NPU requests a weight, this request is put in the FiFo queue. Then, whenever the weight is ready, it is sent via the DEMUX block by selecting the corresponding NPU module.

It has to be appreciated that while the invention has been particularly shown and described with reference to a preferred embodiment, various changes in form and detail may be made therein without departing from the scope of the appended claims. The invention may be advantageously implemented on Field-Programmable Gate Arrays (FPGA) or Application Specific Integrated Circuit (ASIC).

## Claims

1. A neuromorphic hardware architecture (100) comprising:
- a spike generator module (102) for receiving an input pixel and generating a flow of spikes;
- a processing module (104, 106) for processing the flow of spikes ; and
- a classification module (108) inputting the output of the processing module, for selecting an output winner class;
the neuromorphic hardware architecture being **characterized in that** the processing module comprises neural layers circuits implemented to:
- filter the flow of spikes for generating a reduced number of spikes **N;**
- process (704, 706) in parallel in a first hidden layer having N neuron circuits , each spike of the N reduced number of spikes ;
- sequentially write (708), in a First-in First-out buffer the output of each neuron processing circuit; and
- sequentially process (800) the output of the First-in First-out buffer in a plurality of time-multiplexed hidden layers, wherein the output of the last time-multiplexed hidden layer is the input of the classification module.

2. The hardware architecture of claim 1 wherein the spike generator is implemented as a neural coding function such as rate coding or spike select.

3. The hardware architecture of claim 1 or 2 wherein the processing module comprises a neural core module (104) comprising an input layer (202) to receive the flow of spikes, the first hidden layer for parallel processing, and a control module (206) to sequentially read output spikes from the output of each neuron processing circuit (204) and to store them in an output FiFo buffer.

4. The hardware architecture of anyone of claims 1 to 3 wherein each of the plurality of time-multiplexed hidden layers comprises a neural processing unit module (106) to emulate the time-multiplexed layer.

5. The hardware architecture of anyone of claims 1 to 4 wherein the classification module is a Terminate Delta like module.

6. The hardware architecture of anyone of claims 1 to 5 wherein the flow of spikes is an event-based data where only spiking events are processed by each layer of the architecture.

7. The hardware architecture of anyone of claims 1 to 6 wherein the flow of spikes is a frame-based data where every '0' and '1' in an input frame is processed by each layer of the architecture.

8. The hardware architecture of anyone of claims 1 to 7 wherein the spiking neural networks are fully-connected based spiking neural networks or spiking convolutional neural networks.

9. A Field Programmable Gate Array (FPGA) comprising the hybrid architecture of anyone of claims 1 to 8.

10. An Application Specific Integrated Circuit (ASIC) comprising the hybrid architecture of anyone of claims 1 to 9.

11. A computer implemented method for processing spiking neural networks comprising at least the steps of:
- receiving an input pixel and generating a flow of spikes;
- filtering the flow of spikes to generate a reduced number of spikes N;
- processing in parallel the N reduced number of spikes in a first hidden layer having N neuron circuits;
- sequentially writing in a First-in First-out buffer the output of each neuron circuit;
- sequentially processing the output of the First-in First-out buffer in a plurality of time-multiplexed hidden layers; and
- determining an output winner class among the output of the last time-multiplexed hidden layer.

12. The method of claim 11 wherein the steps are executed in a pipelined way.

## Patentansprüche

1. Neuromorphe Hardwarearchitektur (100) umfassend:
- ein Pulsgenerator-Modul (102) zum Empfangen eines Eingabepixels und zum Erzeugen eines Stroms von Pulsen;
- ein Verarbeitungsmodul (104, 106) zum Verarbeiten des Stroms von Pulsen; und
- ein Klassifikationsmodul (108), in das der Ausgabewert des Verarbeitungsmoduls eingegeben wird, um eine Ausgabe-Gewinnerklasse auszuwählen;
wobei die neuromorphe Hardwarearchitektur **dadurch gekennzeichnet ist, dass** das Verarbeitungsmodul Schaltungen mit neuronalen Schichten umfasst, die dafür implementiert sind:
- den Strom von Pulsen zu filtern, um eine verringerte Anzahl von Pulsen N zu erzeugen;
- im Parallelbetrieb in einer ersten verborgenen Schicht mit N Neuronenschaltungen jeden Puls aus der verringerten Anzahl von Pulsen N zu verarbeiten (704, 706);
- den Ausgabewert einer jeden neuronalen Verarbeitungsschaltung sequenziell in einen First-In-First-Out-Puffer zu schreiben (708); und
- den Ausgabewert des First-In-First-Out-Puffers in einer Mehrzahl von zeitgemultiplexten verborgenen Schichten sequenziell zu verarbeiten (800), wobei der Ausgabewert der letzten zeitgemultiplexten verborgenen Schicht den Eingabewert des Klassifikationsmoduls darstellt.

2. Hardwarearchitektur nach Anspruch 1, wobei der Pulsgenerator als eine neuronale Codierfunktion, wie etwa Ratencodierung oder Pulsauswahl implementiert ist.

3. Hardwarearchitektur nach Anspruch 1 oder 2, wobei das Verarbeitungsmodul ein neuronales Kernmodul (104) umfasst, das eine Eingabeschicht (202) zum Empfangen des Stroms von Pulsen, die erste verborgene Schicht zur parallelen Verarbeitung, sowie ein Steuerungsmodul (206) zum sequenziellen Auslesen von Ausgabe-Pulsen am Ausgang einer jeden neuronalen Verarbeitungsschaltung (204) und zum Abspeichern derselben in einem Ausgabe-FIFO-Puffer umfasst.

4. Hardwarearchitektur nach einem der Ansprüche 1 bis 3, wobei eine jede aus der Mehrzahl von zeitgemultiplexten verborgenen Schichten ein neuronales Verarbeitungseinheits-Modul (106) umfasst, um die zeitgemultiplexte Schicht zu emulieren.

5. Hardwarearchitektur nach einem der Ansprüche 1 bis 4, wobei es sich bei dem Klassifikationsmodul um ein "Terminate Delta"-ähnliches Modul handelt.

6. Hardwarearchitektur nach einem der Ansprüche 1 bis 5, wobei es sich bei dem Strom von Pulsen um ein ereignisbasiertes Datenelement handelt, wobei nur pulserzeugende Ereignisse von jeder Schicht der Architektur verarbeitet werden.

7. Hardwarearchitektur nach einem der Ansprüche 1 bis 6, wobei es sich bei dem Strom von Pulsen um ein framebasiertes Datenelement handelt, wobei jede '0' und jede '1' in einem Eingabeframe von jeder Schicht der Architektur verarbeitet werden.

8. Hardwarearchitektur nach einem der Ansprüche 1 bis 7, wobei es sich bei den gepulsten neuronalen Netzwerken um gepulste Netze basierend auf vollständig verbundenen Schichten oder um gepulste, gefaltete bzw. konvolutionale neuronale Netze (CNNs) handelt.

9. Ein feldprogrammierbares Gate-Array (FPGA), das die hybride Architektur nach einem der Ansprüche 1 bis 8 umfasst.

10. Ein anwendungsspezifischer integrierter Schaltkreis (ASIC), der die hybride Architektur nach einem der Ansprüche 1 bis 9 umfasst.

11. Computerimplementiertes Verfahren zum Verarbeiten von gepulsten neuronalen Netzwerken, welches zumindest die Schritte umfasst, dass:
- ein Eingabepixel empfangen wird und ein Strom von Pulsen erzeugt wird;
- der Strom von Pulsen gefiltert wird, um eine verringerte Anzahl von Pulsen N zu erzeugen;
- die verringerte Anzahl von Pulsen N in einer ersten verborgenen Schicht mit N Neuronenschaltungen im Parallelbetrieb verarbeitet wird;
- der Ausgabewert einer jeden Neuronenschaltung sequenziell in einen First-In-First-Out-Puffer geschrieben wird;
- der Ausgabewert des First-In-First-Out-Puffers in einer Mehrzahl von zeitgemultiplexten verborgenen Schichten sequenziell verarbeitet wird; und
- eine Ausgabe-Gewinnerklasse unter den Ausgabewerten der letzten zeitgemultiplexten verborgenen Schicht bestimmt wird.

12. Verfahren nach Anspruch **11,** wobei die Schritte in einer gepipelineten Weise ausgeführt werden.

## Revendications

1. Architecture matérielle neuromorphique (100), comprenant :
- un module générateur de pics (102) pour recevoir un pixel d'entrée et générer un flux de pics ;
- un module de traitement (104, 106) pour traiter le flux de pics ; et
- un module de classification (108) entrant la sortie du module de traitement, pour sélectionner une classe gagnante de sortie ;
l'architecture matérielle neuromorphique étant **caractérisée en ce que** le module de traitement comprend des circuits de couches neuronales mis en œuvre pour :
- filtrer le flux de pics pour générer un nombre réduit de pics N ;
- traiter (704, 706) en parallèle, dans une première couche cachée présentant N circuits de neurones, chaque pic du nombre réduit de pics N ;
- écrire séquentiellement (708), dans un tampon premier entré-premier sorti, la sortie de chaque circuit de traitement de neurones ; et
- traiter séquentiellement (800) la sortie du tampon premier entré-premier sorti dans une pluralité de couches cachées multiplexées dans le temps, dans laquelle la sortie de la dernière couche cachée multiplexée dans le temps est l'entrée du module de classification.

2. Architecture matérielle selon la revendication 1, dans laquelle le générateur de pics est mis en œuvre en tant que fonction de codage neuronal comme un codage de débit ou une sélection de pics.

3. Architecture matérielle selon la revendication 1 ou 2, dans laquelle le module de traitement comprend un module de noyau neuronal (104) comprenant une couche d'entrée (202) pour recevoir le flux de pics, la première couche cachée pour un traitement en parallèle, et un module de commande (206) pour lire séquentiellement les pics de sortie à partir de la sortie de chaque circuit de traitement de neurones (204) et pour les stocker dans un tampon FiFo de sortie.

4. Architecture matérielle selon l'une quelconque des revendications 1 à 3, dans laquelle chacune de la pluralité de couches cachées multiplexées dans le temps comprend un module d'unité de traitement neuronal (106) pour émuler la couche multiplexée dans le temps.

5. Architecture matérielle selon l'une quelconque des revendications 1 à 4, dans laquelle le module de classification est un module de type Terminate Delta.

6. Architecture matérielle selon l'une quelconque des revendications 1 à 5, dans laquelle le flux de pics est une donnée basée sur un événement où seuls des événements à pics sont traités par chaque couche de l'architecture.

7. Architecture matérielle selon l'une quelconque des revendications 1 à 6, dans laquelle le flux de pics est une donnée basée sur une trame où chaque « 0 » et « 1 » dans une trame d'entrée est traité par chaque couche de l'architecture.

8. Architecture matérielle selon l'une quelconque des revendications 1 à 7, dans laquelle les réseaux de neurones à pics sont des réseaux de neurones à pics entièrement connectés ou des réseaux de neurones convolutifs à pics.

9. Réseau de portes programmables sur site (FPGA) comprenant l'architecture hybride selon l'une quelconque des revendications 1 à 8.

10. Circuit intégré spécifique à une application (ASIC) comprenant l'architecture hybride selon l'une quelconque des revendications 1 à 9.

11. Procédé mis en œuvre par ordinateur pour traiter des réseaux de neurones à pics comprenant au moins les étapes consistant à :
- recevoir un pixel d'entrée et générer un flux de pics ;
- filtrer le flux de pics pour générer un nombre réduit de pics N ;
- traitement en parallèle le nombre réduit de pics N dans une première couche cachée présentant N circuits de neurones ;
- écrire séquentiellement dans un tampon premier entré-premier sorti la sortie de chaque circuit de neurones ;
- traiter séquentiellement la sortie du tampon premier entré-premier sorti dans une pluralité de couches cachées multiplexées dans le temps ; et
- déterminer une classe gagnante de sortie parmi la sortie de la dernière couche cachée multiplexée dans le temps.

12. Procédé selon la revendication 11, dans lequel les étapes sont exécutées d'une manière en pipeline.
